# FASCICULE DE BREVET EUROPEEN

(11) **EP 2 189 373 B1**
(45) Date de publication et mention de la délivrance du brevet: **04.01.2012**
(21) Numéro de dépôt: 09290833.4
(22) Date de dépôt: 03.11.2009
(51) Int. Cl.: B64F 5/00, B65D 85/68, B65D 25/10

(54) **Stabilisateur pour stabiliser les disques d'un puits de chaleur notamment lorsque le puits de chaleur est conditionné dans un conteneur**
Stabilisator zur Stabilisierung der Scheiben einer Wärmesenke, insbesondere wenn die Wärmesenke in einem Behälter verpackt wird
Stabiliser for stabilising the discs of a heat sink, in particular when the heat sink is packaged in a container

(30) Priorité: 20.11.2008 FR 0806524
(43) Date de publication de la demande: 26.05.2010
(73) Titulaire: Messier-Bugatti-Dowty, 78140 Velizy Villacoublay (FR)
(72) Inventeur: Fiore, Michel, 67120 Molsheim (FR)
(74) Mandataire: Lavialle, Bruno François Stéphane

(56) Documents cités:
- GB-A- 1 271 197
- US-A- 4 790 430
- US-A- 6 036 007
- US-A1- 2008 000 787

## Description

L'invention concerne un stabilisateur pour stabiliser une pile de disques de freins, spécialement des disques de freins d'aéronef, pouvant être transportés dans un conteneur.

### ARRIERE-PLAN TECHNOLOGIQUE

L'invention est plus spécialement appliquée à un conteneur ne recevant que des disques de freins, empilés les uns sur les autres. L'ensemble des disques d'un frein (composé alternativement de disques rotors et de disques stators) est communément appelé puits de chaleur (ou heat pack en anglais), et est transporté en bloc dans un conteneur adapté.

Les puits de chaleur sont transportés en plusieurs occasions. Les puits de chaleur neufs sortant de l'usine de fabrication sont envoyés vers les clients utilisateurs, en l'occurrence le constructeur d'aéronef si l'aéronef est en cours d'assemblage, ou, si l'aéronef est déjà en service en compagnie, vers les locaux de stockage de la compagnie, qui peuvent bien sûr se situer n'importe ou dans le monde. Par ailleurs, la compagnie qui vient de remplacer un puits de chaleur usé par un puits de chaleur neuf replace le puits de chaleur usé dans l'un des conteneurs pour le renvoyer vers l'usine de fabrication pour que les disques usés soient reconditionnés dans l'usine de la demanderesse ou tout autre lieu adéquat.

C'est ainsi que la demanderesse est amenée à mettre en oeuvre plusieurs milliers de conteneurs. La demanderesse utilise à ce jour des conteneurs de forme généralement de révolution, comportant une base sur laquelle les disques sont empilés, un capot rapporté sur la base recouvrant le tout. Le puits de chaleur prend appui sur la base, et un tirant central vissé sur la base et terminé par un anneau de levage permet la manutention du conteneur lorsque celui-ci est fermé.

Le document US 4,790,430 qui décrit un stabilisateur adapté à stabiliser des disques d'un puits de chaleur est considéré comme le document de l'art antérieur le plus proche.

Cependant, dans tous les conteneurs dans lesquels les disques sont transportés empilés les uns sur les autres, il existe un risque que les disques glissent les uns sur les autres lors de leur transport dans le conteneur. Pour les puits de chaleur dont les disques ont un diamètre externe proche du diamètre interne du conteneur, les disques sont naturellement centrés et stabilisés par la paroi latérale du conteneur. Mais pour des puits de chaleur avec des disques plus petits, rien ne vient stabiliser les disques pour les empêcher de glisser les uns sur les autres.

### OBJET DE L'INVENTION

L'invention vise à proposer un stabilisateur pour stabiliser des disques d'un puits de chaleur, notamment leur de leur transport dans un conteneur.

### BREVE DESCRIPTION DE L'INVENTION

Selon l'invention, on propose un stabilisateur adapté à stabiliser des disques d'un puits de chaleur empilés les uns sur les autres, le stabilisateur comportant au moins deux poussoirs parallèles allongés ayant une hauteur compatible avec la hauteur du puits de chaleur, les poussoirs étant mobiles selon une direction perpendiculaire aux poussoirs, les poussoirs étant associés à un système de manoeuvre irréversible permettant d'écarter ou de rapprocher les poussoirs, ces derniers s'étendant pour être en service en regard d'un diamètre interne des disques.

Ainsi, pour stabiliser les disques, il suffit d'introduire le stabilisateur à l'intérieur des disques de sorte que les poussoirs s'étendent en regard du diamètre interne des disques. Le système de manoeuvre est alors actionné pour écarter les poussoirs jusqu'à ce qu'ils viennent en contact avec le diamètre interne des disques. L'irréversibilité du système de manoeuvre assure que les poussoirs vont rester ainsi écartés. Les poussoirs sont alors avantageusement engagés dans les encoches des disques stators, ce qui les empêche non seulement de glisser, mais également de tourner. Les disques sont ainsi stabilisés.

De préférence, les poussoirs sont au nombre de deux et sont associés à des bras engagés dans un corps creux définissant un chemin de guidage des bras. Le chemin de guidage assure que les poussoirs ne peuvent se déplacer que selon une direction commune.

### BREVE DESCRIPTION DES DESSINS

L'invention sera mieux comprise à la lumière de la description qui suit des figures des dessins annexés, parmi lesquelles :
- la figure 1 est une vue en perspective d'une coque inférieure d'un conteneur selon un mode particulier de réalisation de l'invention ;
- la figure 2 est une vue en perspective d'une coque supérieure adaptable à la coque inférieure de la figure 1 ;
- la figure 3 est une vue en coupe du conteneur comprenant la coque inférieure de la figure 1 et la coque supérieure de la figure 2;
- la figure 3A est une vue en perspective du conteneur de la figure 3 ;
- la figure 4 est une vue en coupe du conteneur de la figure 3 dans lequel un puits de chaleur de 20 pouces est conditionné ;
- la figure 5 est une vue en coupe partielle du support équipant la coque inférieure du conteneur ;
- la figure 6 est une vue en coupe partielle d'une variante de réalisation du support ;
- la figure 7 est une vue en coupe du conteneur de la figure 3 dans lequel un puits de chaleur de 22 pouces est illustré en silhouette ;
- la figure 8 est une vue en coupe analogue à la figure 7, mais avec un puits de chaleur de 23 pouces ;
- la figure 9 est une vue en perspective éclatée d'un stabilisateur destiné à être utilisé en coopération avec le conteneur de la figure 3,
- La figure 10 est une vue en perspective du stabilisateur de la figure 9 ;
- La figure 11 est une vue en perspective d'un conteneur recevant un puits de chaleur, dans lequel le stabilisateur a été mis en place ;
- La figure 12 est une vue en perspective d'une assiette venant coiffer le puits de chaleur après la mise en place du stabilisateur.

### DESCRIPTION DETAILLEE DE L'INVENTION

Le conteneur qui est décrit ici est spécialement adapté à recevoir trois types de puits de chaleur, à savoir un puits de chaleur de 20 pouces, un puits de chaleur de 22 pouces, et un puits de chaleur de 23 pouces (les dimensions en pouces sont relatives au diamètre extérieur des disques). Bien évidemment, l'invention ne se limite pas à ces exemples, donnés à titre illustratif.

Ces puits de chaleur sont mis en place dans le conteneur en présentant le stator arrière (c'est-à-dire le disque stator qui vient en regard de la plaque de reprise d'effort en extrémité du tube de torsion du frein qui reçoit le puits de chaleur) vers le bas, de sorte que ce disque sera appelé par la suite disque inférieur. Bien sûr, l'invention n'est pas limitée à cette configuration, et l'invention couvre également le cas ou le puits de chaleur est présenté avec le stator avant vers le bas.

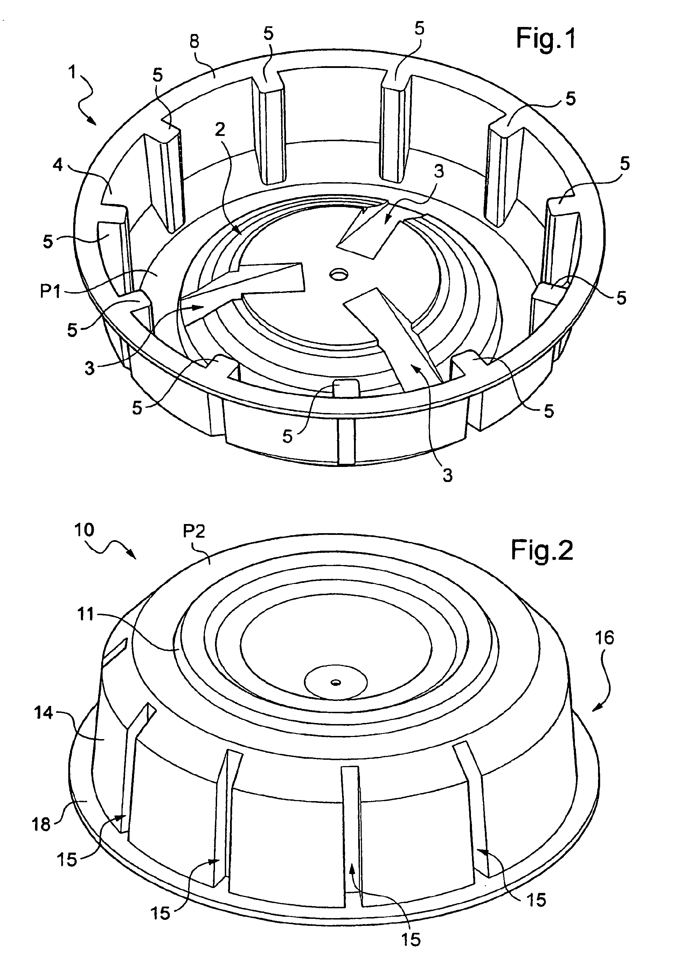

En référence aux figures 1 à 3, le conteneur comporte deux coques de forme générale de révolution formant l'enveloppe externe du conteneur, dont une coque inférieure ou base 1, et une coque supérieure ou couvercle 10. Ces coques sont avantageusement réalisées en matière plastique, par injection, moulage, rotomoulage ou tout autre procédé connu.

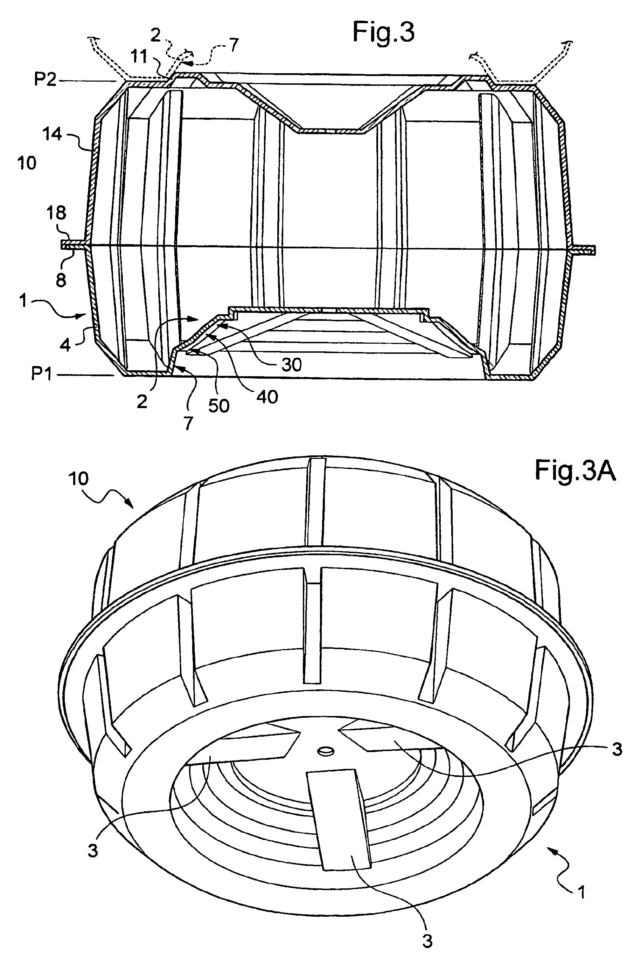

La coque inférieure 1 comporte une portion plane annulaire P1 qui définit un plan d'appui par lequel le conteneur repose sur le sol ou toute autre surface de réception, ou encore sur un autre conteneur similaire, comme cela sera détaillé plus loin. De la portion plane annulaire P1 s'étend, au centre, un support 2 adapté à recevoir les puits de chaleur. Le support 2 est de forme générale de révolution, mais comporte ici trois échancrures 3 s'étendant à 120 degrés l'une de l'autre. Les échancrures 3 sont venues de moulage avec le support 2 et contribuent à raidir ce dernier. En outre, elles définissent un passage sous les sièges (qui seront détaillés plus loin) permettant l'introduction, sous le puits de chaleur, des trois griffes d'un organe de levage couramment utilisé par la demanderesse mais aussi par nombre de ses clients. Cet organe de levage est introduit au centre du puits de chaleur, et ses griffes viennent prendre place sous les puits de chaleur dans l'espace libre défini par les échancrures 3, ce qui permet de soulever en bloc le puits de chaleur reçu dans la coque inférieure 1. Les échancrures 3 sont plus particulièrement visibles de dessous sur la figure 3A.

La coque inférieure 1 comporte en outre une paroi latérale 4 qui est rigidifiée par des raidisseurs 5 régulièrement répartis, venus de moulage avec la paroi latérale 4, et qui forment des retraits qui saillent intérieurement dans la base 1. Ces raidisseurs forment ainsi naturellement des centreurs qui coopèrent avec les surfaces externes des disques de plus grand diamètre pour les empêcher de glisser les uns sur les autres. La coque inférieure 1 comporte enfin une collerette périphérique 8 formant un plan d'appui pour recevoir la coque supérieure 10.

La coque supérieure, ou couvercle 10, comporte une portion plane annulaire P2 qui définit un plan d'appui apte à recevoir un autre conteneur superposé. De la portion plane annulaire P2 s'étend un centreur tronconique 11 qui coopère avec une paroi interne tronconique 7 (visible à la figure 3) constituée par la paroi inférieure interne du support 2 de la coque inférieure 1 d'un conteneur superposé (illustré en pointillés à la figure 3). La coque supérieure 10 comporte, comme la coque inférieure 1, une paroi latérale 14 présentant des raidisseurs 15, que l'on voit sur la figure 2 uniquement sous forme de retraits. Ici, et contrairement à la coque inférieure 1, les raidisseurs 15 ne sont pas régulièrement répartis. En effet, une zone 16 de la paroi latérale 14, visible à la droite de la figure 2, est exempte de raidisseurs et présente donc une surface lisse adaptée à recevoir une étiquette ou à former une zone d'écriture permettant d'identifier le contenu du conteneur sans avoir à ouvrir ce dernier. La coque supérieure 10 comporte enfin une collerette 18 adaptée à coopérer avec la collerette 8 de la coque inférieure 1 pour positionner et centrer la coque supérieure 10 sur la coque inférieure 1.

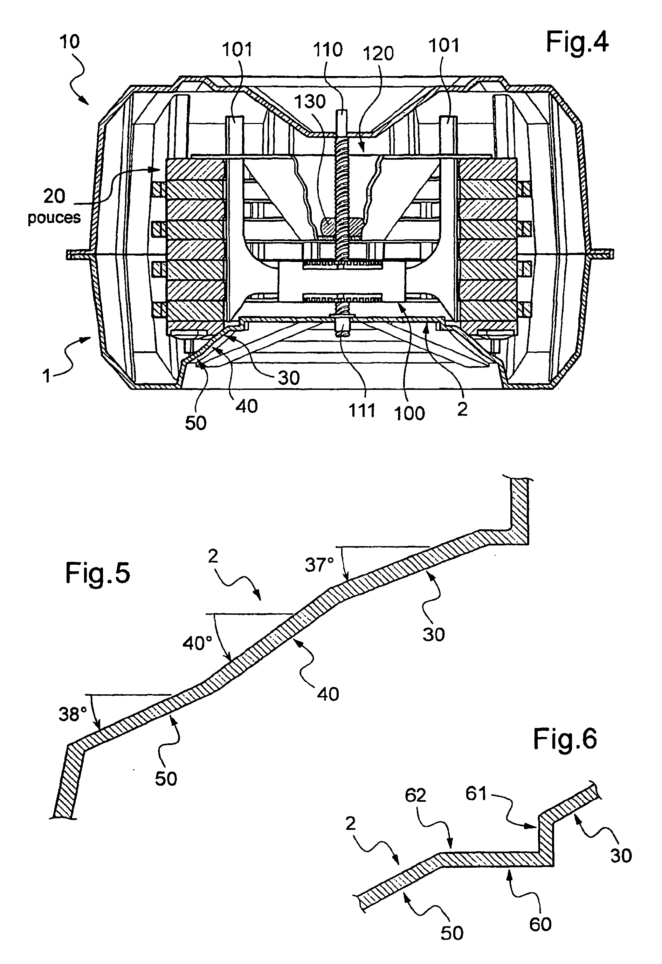

Selon l'invention, le support 2 comporte ici trois sièges, respectivement 30, 40, 50 pour recevoir respectivement les puits de chaleur de diamètre 20, 22 et 23 pouces. Chacun des sièges est adapté à coopérer avec une portion de surface annulaire du disque inférieur du puits de chaleur correspondant. En l'occurrence ici, le disque inférieur est constitué par le stator arrière du puits de chaleur, lequel est le cas échéant muni de plots, comme cela est visible à la figure 4.

Ici, les disques inférieurs des trois puits de chaleur en question ont tous des diamètres internes chanfreinés, mais la pente des chanfreins est à chaque fois différente. Chacun des sièges a donc une pente adaptée à recevoir chacun des puits de chaleur de sorte que le disque inférieur porte sur le siège selon une surface d'appui annulaire, et non sur une seule arête.

Sur la figure 4, on a illustré la façon dont le puits de chaleur de 20 pouces coopère avec son siège 30. Sur la figure 5, on distingue les différents sièges 30,40,50, avec leurs différentes pentes, toutes adaptées au chanfrein d'entrée du puits de chaleur correspondant. Les valeurs des pentes sur la figure 5 ne sont bien sûr données qu'à titre indicatif. A la figure 6, on a représenté un support adapté à recevoir des puits de chaleur de 20, 22 et 23 pouces respectivement. Les puits de chaleur de 20 et 23 pouces sont identiques à ceux envisagés jusque maintenant, mais le puits de chaleur de 22 pouces a maintenant une entrée non chanfreinée. Le siège 40 est alors remplacé par le siège 60 illustré ici. Un tel siège comporte avantageusement une surface cylindrique circulaire 61 centrant le disque inférieur, et une surface d'appui plane 63 coopérant avec la face externe du disque inférieur. Ainsi, et même pour ce type de disque inférieur, le support selon l'invention coopère avec le disque inférieur non sur une seule arête, mais selon une surface d'appui.

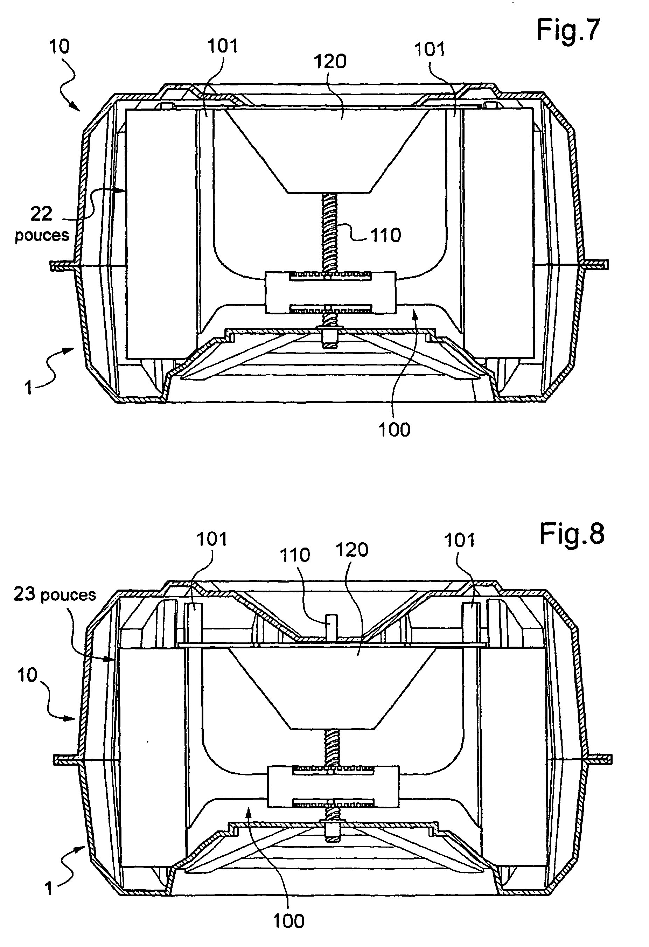

A titre d'illustration, les figures 7 et 8 illustrent le conteneur fermé recevant respectivement un puits de chaleur de 22 pouces et un puits de chaleur de 23 pouces, dont seules les silhouettes externes ont été représentées ici. On distingue que ces puits de chaleur sont en appui, via le chanfrein d'entrée du disque inférieur, respectivement sur le siège 40 et sur le siège 50.

On remarquera, comme cela est illustré à la figure 4, que les disques inférieurs sont souvent équipés de plots qui saillent de la surface extérieure du disque. Il convient d'étager les sièges de façon que, pour les puits de chaleur dont les plots se retrouvent en regard de l'un des autres sièges, les plots trouvent devant eux un espace suffisant pour ne pas venir en contact avec le siège en regard. A cet égard, il est avantageux, le cas échéant, de prévoir une marche entre deux sièges successifs.

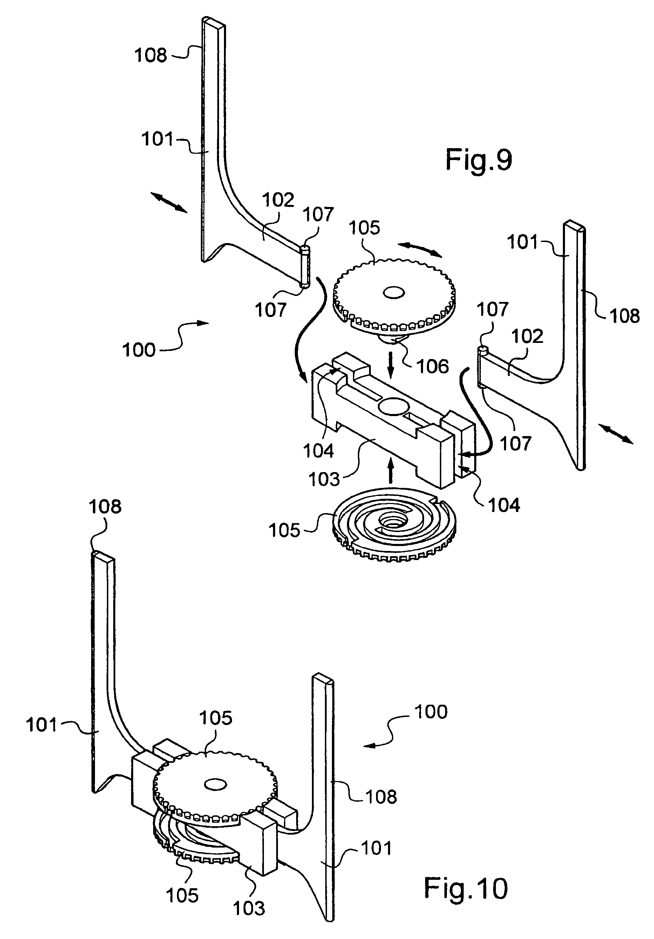

Selon l'invention, le conteneur est utilisé en conjonction avec un stabilisateur 100, illustré en éclaté à la figure 9, et assemblé à la figure 10. Le stabilisateur 100 est destiné à maintenir les disques du puits de chaleur pour qu'ils ne glissent pas les uns sur les autres pendant le transport dans le conteneur. Le stabilisateur 100 comprend deux poussoirs 101 allongés s'étendant parallèlement l'un à l'autre, et associés à des bras 102 qui sont engagés dans des rainures 104 d'un corps 103 qui définissent un chemin de guidage définissant une même direction de déplacement des poussoirs 101. Le corps 103 reçoit par ailleurs deux molettes 105 dont l'une comporte un moyeu 106 qui traverse le corps 103 pour former un pivot de l'ensemble formé par les deux molettes. Les faces en regard des molettes 105 comportent des rainures en spirale et reçoivent des doigts 107 portés à l'extrémité des bras 102, de sorte qu'une rotation des molettes 105 provoque un éloignement ou un rapprochement des poussoirs 101 selon des directions diamétralement opposées, comme indiqué symboliquement par les flèches épaisses. Les molettes 105 contribuent en outre à guider les bras 102 dans les rainures 104, par coopération de la face internes des molettes 105 avec les faces en regard des bras 102. Ainsi, les poussoirs 101 sont guidés selon une direction perpendiculaire aux poussoirs eux-mêmes. La liaison entre les molettes 105 et les poussoirs 101 est irréversible, de sorte qu'il n'est pas possible d'écarter ou de rapprocher les poussoirs 101 si les molettes ne sont pas manoeuvrées intentionnellement. L'ensemble des pièces du stabilisateur 100 est avantageusement moulé ou injecté en matière plastique. Les faces externes des poussoirs 101 qui viennent en contact avec les disques sont avantageusement recouvertes d'un revêtement 108 en élastomère ou tout autre matériau résilient apte à amortir les chocs. Il importe bien sûr que les poussoirs aient une hauteur compatible avec la hauteur du puits de chaleur, pour que tous les disques soient stabilisés.

Sur les figures 4,7 et 8, on voit le stabilisateur 100 qui a été mis en place à l'intérieur du puits de chaleur, après que celui-ci ait été déposé dans la coque inférieure 1. Pour ce faire, et avant de mettre en place le stabilisateur 100, il convient d'insérer un tirant 110 dont l'extrémité inférieure est vissée dans un insert 111 au centre du fond de la coque inférieure 1. Le stabilisateur 100 est alors présenté et enfilé sur le tirant 110 de sorte que les poussoirs 101 s'étendent en regard des disques, à l'intérieur de ceux-ci. Puis les molettes 105 sont manoeuvrées jusqu'à ce que les poussoirs du stabilisateur viennent en appui contre les disques. Ceux-ci sont ainsi immobilisés les uns par rapport aux autres. Le risque de glissement des disques entre eux est alors éliminé.

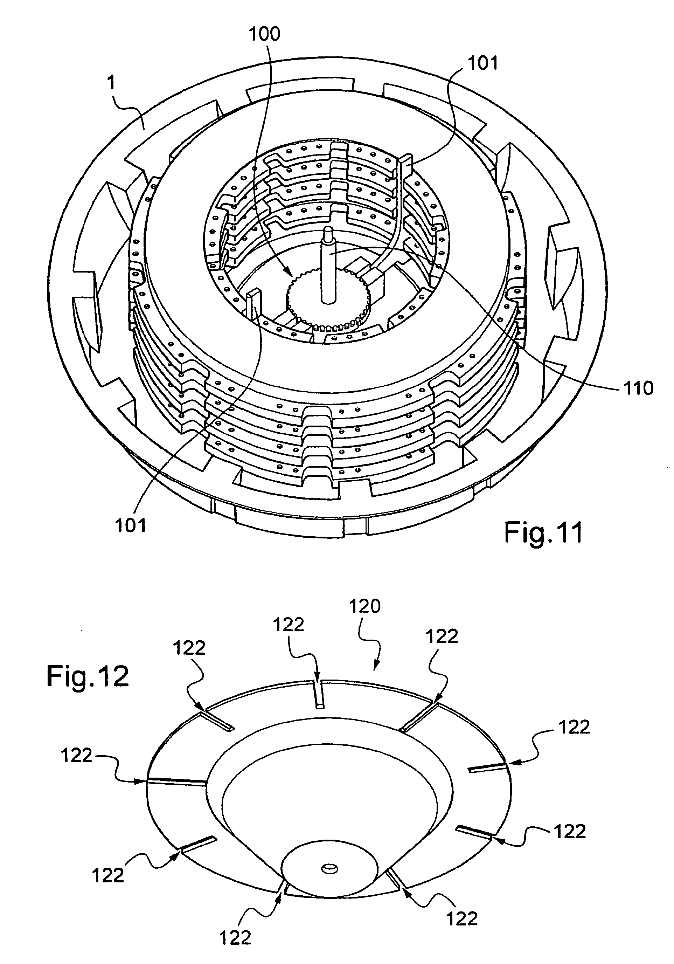

Sur la figure 11, on voit comment le stabilisateur est mis en place dans le conteneur. Il est enfilé sur le tirant 110, puis la molette supérieure 105 est manoeuvrée de sorte que les bras 101 viennent se loger dans les encoches des disques stators.

Pour parfaire le conditionnement du puits de chaleur dans le conteneur, il convient de mettre en place par-dessus le puits de chaleur une assiette 120 illustrée à la figure 12. L'assiette 120 comporte un plateau 121 dans lequel des rainures radiales 122 ont été pratiquées pour permettre le passage de l'extrémité des bras 101 au travers de l'assiette 120. Le plateau 121 vient se poser sur la face externe du disque supérieur du puits de chaleur. Le centre de l'assiette 120 comporte un orifice central permettant le passage du tirant, et affecte une forme conique, ce qui, comme illustré à la figure 4, permet d'installer sur le tirant 110 un écrou rapide 130 permettant de maintenir fermement les uns contre les autres les disques formant le puits de chaleur.

Il convient ensuite de mettre en place la coque supérieure 10 sur la coque inférieure 1 pour refermer le conteneur. Dans cette position, le tirant 110 traverse la coque supérieure 10 de façon qu'il soit possible d'adapter sur l'extrémité saillante du tirant 110 un anneau de levage qui permet bien sûr le levage du conteneur, mais qui retient également la coque supérieure 10 contre la coque inférieure 1.

L'invention n'est pas limitée à ce qui vient d'être décrit, mais englobe bien au contraire toute variante entrant dans le cadre défini par les revendications. En particulier, il est bien entendu que les puits de chaleur mentionnés ici le sont à titre d'illustration. Le conteneur de l'invention pourra être adapté à d'autres puits de chaleur, et pourra être prévu pour transporter d'autres types de puits de chaleur. En outre, bien que le conteneur décrit ici est adapté à recevoir trois types de puits de chaleur, ce même conteneur pourra recevoir d'autres puits de chaleur, de même diamètre, pourvu qu'ils soient compatibles avec les sièges.

En outre, bien que le support soit ici venu de matière avec la coque inférieure, on pourra prévoir un support amovible rapporté sur la coque inférieure. Enfin, bien que le conteneur illustré comporte une coque inférieure et une coque supérieure formant respectivement une base et un couvercle du conteneur, l'invention est plus généralement applicable à toute autre forme de conteneur, par exemple un conteneur comportant une base, un couvercle et une ceinture comme celui du document US4790430. Dans tous les cas, le support est porté par la base, que cette base soit équipée d'une paroi latérale pour en faire une coque inférieure comme illustré ici, ou non.

Par ailleurs, bien que l'on ait indiqué que le stabilisateur de l'invention est utilisé en conjonction avec un conteneur, il est bien évident que le stabilisateur pourra être utilisé dans d'autres circonstances. Il pourra par exemple être utilisé pour stabiliser des puits de chaleurs stockés en magasin, hors conteneur. Il pourra servir aussi à centrer des disques empilés, pour mettre en forme le puits de chaleur.

Enfin, bien que le stabilisateur illustré ici ne comporte que deux poussoirs, on pourra bien sûr prévoir un nombre plus élevé de poussoirs, par exemple trois ou quatre. Le corps aura alors une forme en étoile, définissant plusieurs rainures convergentes vers un axe central qui coïncide avec l'axe de rotation de l'organe de manoeuvre des poussoirs, qui peut être comme ici une molette à rainures spirales, mais également tout autre dispositif connu de manoeuvre, comme par exemple un système à crémaillère.

## Revendications

1. Stabilisateur adapté à stabiliser des disques d'un puits de chaleur, **caractérisé en ce qu'**il comporte au moins deux poussoirs (101) parallèles allongés ayant une hauteur compatible avec la hauteur du puits de chaleur, et mobiles chacun selon une direction perpendiculaire aux poussoirs, les poussoirs étant associés à un système de manoeuvre irréversible (104,105) permettant d'écarter ou de rapprocher les poussoirs, ces derniers s'étendant pour être en service en regard d'un diamètre interne des disques.

2. Stabilisateur selon la revendication 1, dans lequel les poussoirs (101) sont au nombre de deux et sont associés à des bras (102) engagés dans un corps (103) creux définissant un chemin de guidage (104) des bras permettant un déplacement des poussoirs selon une direction commune.

3. Stabilisateur selon la revendication 2, dans lequel les bras sont terminés par des doigts (107) qui pénètrent dans des rainures spirales ménagées sur des faces en regard de deux molettes (105) solidaires s'étendant de part et d'autre du corps (103).

4. Stabilisateur selon la revendication 1, dans lequel les poussoirs ont des arêtes externes en regard des disques qui sont revêtues d'un revêtement résilient (108).

## Claims

1. A stabilizer suitable for stabilizing disks of a heat pack, the stabilizer being **characterized in that** it includes at least two elongate parallel pushers (101) of height compatible with the height of the heat pack, each movable in a direction perpendicular to the pushers, the pushers being associated with an irreversible driver system (104, 105) enabling the pushers to be moved apart or towards each other, the pushers extending in service so as to face an inside diameter of the disks.

2. A stabilizer according to claim 1, wherein the pushers (101) are two in number and are associated with arms (102) engaged in a hollow body (103) defining a guide path (104) for the arms, enabling the pushers to be moved along a common direction.

3. A stabilizer according to claim 2, wherein the arms are terminated by fingers (107) that penetrate into spiral grooves formed on the facing faces of two knobs (105) that are secured to each other and that extend on either side of the body (103).

4. A stabilizer according to claim 1, wherein the pushers have outer edges facing the disks that are covered in a springy covering (108).

## Patentansprüche

1. Stabilisator, der dazu geeignet ist, Scheiben eines Bremspakets zu stabilisieren, **dadurch gekennzeichnet, dass** er mindestens zwei längliche parallele Stößel (101) umfasst, die eine mit der Höhe des Bremspakets kompatible Höhe haben und jeweils in einer zu den Stößeln senkrechten Richtung beweglich sind, wobei die Stößel mit einem irreversiblen Betätigungssystem (104, 105) verbunden sind, das ein Auseinanderrücken oder gegenseitiges Annähern der Stößel ermöglicht, wobei sich diese Letztgenannten zum Zwecke eines Einsatzes gegenüber einem Innendurchmesser der Scheiben befinden.

2. Stabilisator nach Anspruch 1, wobei zwei Stößel (101) vorhanden sind, die mit Armen (102) verbunden sind, welche mit einem Hohlkörper (103) in Eingriff stehen, der einen Führungsweg (104) zur Führung der Arme definiert, welcher eine Verschiebung der Stößel entlang einer gemeinsamen Richtung gestattet.

3. Stabilisator nach Anspruch 2, wobei die Arme mit Zapfen (107) abschließen, die in spiralförmige Nuten eindringen, die in einander gegenüberliegenden Flächen von zwei fest verbundenen Rändelrädern (105) ausgebildet sind, die sich zu beiden Seiten des Körpers (103) erstrecken.

4. Stabilisator nach Anspruch 1, wobei die Stößel den Scheiben gegenüberliegend äußere Anschläge haben, die mit einem schlagfesten Überzug (108) überzogen sind.
